# EUROPÄISCHE PATENTSCHRIFT

(11) **EP 1 721 789 B1**
(45) Veröffentlichungstag und Bekanntmachung des Hinweises auf die Patenterteilung: **30.01.2008**
(21) Anmeldenummer: 06007900.1
(22) Anmeldetag: 13.04.2006
(51) Int. Cl.: B60R 21/26

(54) **Gasgenerator**
Airbag inflator
Générateur de gaz

(30) Priorität: 13.05.2005 DE 202005007611 U
(43) Veröffentlichungstag der Anmeldung: 15.11.2006
(73) Patentinhaber: TRW Airbag Systems GmbH, 84544 Aschau am Inn (DE)
(72) Erfinder: Bierwirth, Sebastian, Dr., 83562 Rechtmehring (DE)
(74) Vertreter: Kitzhofer, Thomas

(56) Entgegenhaltungen:
- DE-A1- 4 141 908
- DE-A1- 19 533 606
- US-B1- 6 644 198

## Beschreibung

Die Erfindung betrifft einen Gasgenerator nach dem Oberbegriff des Anspruchs 1.

Gasgeneratoren als Teil einer Rückhalteeinrichtung in Fahrzeugen weisen eine Zündervorrichtung auf, die eine in einer Verstärkerkammer vorgesehene Verstärkerladung zünden kann. Aus Ausströmöffnungen der Verstärkerkammer austretende Gase entzünden daraufhin den in einer angrenzenden Brennkammer vorhandenen Treibstoff, mittels dem ein Gassack aufgeblasen werden kann.

Die Verstärkerkammer, die die Zündervorrichtung und die Verstärkerladung aufnimmt, besteht beispielsweise aus verschweißten Stahlteilen oder Alugußteilen. Derartig ausgebildete Verstärkerkammern müssen in zusätzlichen Fertigungsschritten hergestellt und mit zusätzlichen Bauteilen verbunden werden.

Die gattungsbildende DE 195 33 606 A1 zeigt einen Gasgenerator mit einem Zünder, der in einem Körper aus Kunststoff eingebettet ist. Zusammen mit dem Zünder ist ein Metalladapter in dem Kunststoff eingebettet. Der Metalladapter ist an einen Gasgeneratorgehäuse angeschweißt, um den Zünder daran zu befestigen. Der Körper aus gespritztem Kunststoff bildet einen Teil einer die Verstärkerkammer umgebenden Wand.

Aus der DE 41 41 908 A1 ist ein Zünder für einen Gasgenerator bekannt. Der Zünder weist eine Metallkappe auf, die eine Zünderladung aufnimmt. Zum Zünder führende Anschlußleitungen sind von einem gespritzten Kunststoff umgeben.

Die US 6,644,198 B1 beschreibt einen Zünder, der abschnittsweise von einem Kunststoffkörper umgeben und in einem Befestigungsteil aus Metall aufgenommen ist.

Die Aufgabe der Erfindung besteht darin, einen Gasgenerator bereitzustellen, der einfach und kostengünstig herzustellen ist.

Zu diesem Zweck sieht die Erfindung einen Gasgenerator mit den Merkmalen des Anspruchs 1 vor.

Die Verstärkerkammer wird also an den Kunststoffsockel angespritzt, genauer gesagt beim Einspritzen der Zündervorrichtung mitgespritzt. Die gespritzte Kunststoffschicht ist in einem Verfahrensschritt hergestellt und einstückig ausgebildet. Dadurch entfällt ein zusätzlicher Fertigungsschritt, und darüber hinaus sind keine zusätzlichen Bauteile notwendig, die die Umfangswand der Verstärkerkammer bilden. Der Gasgenerator kann deshalb kostengünstig und einfach hergestellt werden.

Vorzugsweise ist die Verstärkerladung vollständig in dem von der Umfangswand definierten Füllvolumen enthalten.

Bevorzugt weist die Umfangswand Bereiche mit vorbestimmten Ausströmöffnungen auf. Die Ausströmöffnungen ermöglichen, daß nach dem Zünden der Zündervorrichtung in der Verstärkerkammer erzeugtes Gas in eine angrenzende Brennkammer überströmen kann. Die mit einem Treibstoff gefüllte Brennkammer kann dann einen daran anschließenden Gassack aufblasen.

Die Ausströmöffnungen können im ungezündeten Zustand geschlossen und nach dem Zünden der Zündervorrichtung geöffnet sein.

Die Umfangswand ist z.B. in den Bereichen der Ausströmöffnungen dünnwandiger als in den übrigen Bereichen ausgebildet, so daß nach dem Zünden der Zündervorrichtung die dünnwandigeren Bereiche geöffnet werden.

Gemäß einer Ausführungsform weist die Umfangswand in allen Bereichen eine konstante Dicke auf.

Eine Kappe ist vorzugsweise vorgesehen, die die Verstärkerkammer auf der dem Zünder gegenüberliegenden Seite begrenzt. Vor dem Anbringen der Kappe wird die Verstärkerladung eingebracht. Da auch die angrenzende Brennkammer von der dem Zünder gegenüberliegenden Seite befüllt wird, kann die Befüllung der Verstärkerkammer und der Brennkammer von derselben Seite erfolgen, wodurch die Befüllung vereinfacht wird.

Gemäß einer Ausführungsform ist die Kappe auf einem Generatorgehäuseabschnitt abgestützt, der der Zündervorrichtungsaufhahmeöffnung gegenüberliegt.

Die Kappe ist bevorzugt verschieblich und wird von einem federelastischen Element im ungezündeten Zustand so beaufschlagt, daß sie die Bereiche der Ausströmöffnungen bedeckt. Durch das federelastische Element ist die Verstärkerladung vorgespannt gelagert; die tablettenförmige Verstärkerladung reibt somit nicht aneinander und nützt sich dabei nicht ab. Die Wirkungsweise des Gasgenerators ist somit selbst nach mehreren Jahren gewährleistet.

Die Kappe kann über die Verstärkerkammer gestülpt sein und die Umfangswand seitlich abstützen.

Vorzugsweise grenzt an die Umfangswand wenigstens abschnittsweise eine Verstärkungslage an. Diese Verstärkungslage gewährleistet eine ausreichende Festigkeit der kunststoffgespritzten Umfangswand, die aufgrund des in der Verstärkerkammer auftretenden Drucks beim Zünden notwendig ist.

Gemäß einer Ausführungsform ist die Verstärkungslage aus Metall.

Die Verstärkungslage ist z.B. von einer Kunststoffwand umgeben, die an die Umfangswand gespritzt ist.

Vorzugsweise weist die Verstärkungslage Ausströmöffnungen auf. Diese Ausströmöffnungen sind bereits im ungezündeten Zustand vorgesehen, wobei sie größer sind als die Ausströmöffnungen in der Umfangswand, so daß eine einfachere Montage ermöglicht wird, da ein Anpassen und Ausrichten der Verstärkungslage an die Ausströmöffnungen der Umfangswand nicht notwendig ist.

Die Verstärkungslage kann spiral- oder ringförmig ausgebildet sein. Eine spiralförmige Verstärkungslage sorgt für eine gute Stabilisierung bei einem senkrecht zur Umfangswand aufgebrachten Druck.

Alternativ ist die Verstärkungslage entlang der Umfangswand in Längsrichtung angeordnet.

Weitere Merkmale und Vorteile der Erfindung ergeben sich aus der nachfolgenden Beschreibung und den Zeichnungen. Die Erfindung wird nachfolgend anhand von bevorzugten Ausführungsformen beschrieben. In den Zeichnungen zeigen:
- Figur 1 eine Schnittansicht eines erfindungsgemäßen Gasgenerators gemäß einer ersten Ausführungsform,
- Figur 2 eine Schnittansicht des erfindungsgemäßen Gasgenerators gemäß einer zweiten Ausführungsform,
- Figur 3 einen vergrößerten Ausschnitt des mit X bezeichneten Bereichs in Figur 2,
- Figur 4 eine Schnittansicht des erfindungsgemäßen Gasgenerators gemäß einer dritten Ausführungsform,
- Figur 5 einen vergrößerten Ausschnitt des mit Y bezeichneten Bereichs in Figur 4,
- Figur 6 eine Schnittansicht des erfindungsgemäßen Gasgenerators gemäß einer vierten Ausführungsform,
- Figur 7 einen vergrößerten Ausschnitt des mit Z bezeichneten Bereichs in Figur 6, und
- Figur 8 eine Schnittansicht des erfindungsgemäßen Gasgenerators gemäß einer fünften Ausführungsform.

In den Figuren ist ein Gasgenerator 10 mit einem Generatorgehäuse 12 gezeigt, der eine mittig angeordnete Zündervorrichtung aufweist. Die Zündervorrichtung hat einen mit Anschlußleitungen 14 versehenen, nach außen abgedichteten Zünder 16. Die Anschlußleitungen 14 ragen durch eine Zündervorrichtungsaufnahmeöffnung 18 im Gehäuse 12 aus diesem heraus. Zünder 16 samt Anschlußleitungen 14 sind in einem Kunststoffsockel 20 bei dessen Spritzen eingebettet. Die Öffnung 18 wird durch einen sie umgebenden Rand 22 des Gehäuses 12 begrenzt.

Das gemäß den Figuren obere Ende des Zünders 16 mündet in eine mit einer Verstärkerladung 23 gefüllte Verstärkerkammer 24, die eine Umfangswand 26 aufweist. Die Umfangswand 26 ist einstückig in einem Herstellungsschritt mit dem Kunststoffsockel 20 gespritzt. Beim Spritzen von Sockel 20 und Umfangswand 26 wird der Zünder 18 in den Sockel 20 eingebettet, und ferner wird diese Einheit in das Gehäuse 12 integriert, indem der Rand 22 in den Kunststoff beim Spritzen eingebettet wird. Hierdurch ergibt sich eine stabile, gasdichte Integration der Zündervorrichtung in das Gehäuse 12.

In der Umfangswand 26 der Verstärkerkammer 24 sind Ausströmöffnungen 28 vorgesehen, von denen in den Figuren nur zwei gezeigt sind, über die in der Verstärkerkammer 24 erzeugtes Gas in eine angrenzende Brennkammer 30 überströmen kann. Die Brennkammer 30 ist dabei mit einem schematisch gezeigten geeigneten Treibstoff gefüllt und weist ebenfalls Ausströmöffnungen und einen Filter auf, auf die nicht weiter eingegangen wird.

Im weiteren wird auf die unterschiedlichen Ausführungsformen eingegangen.

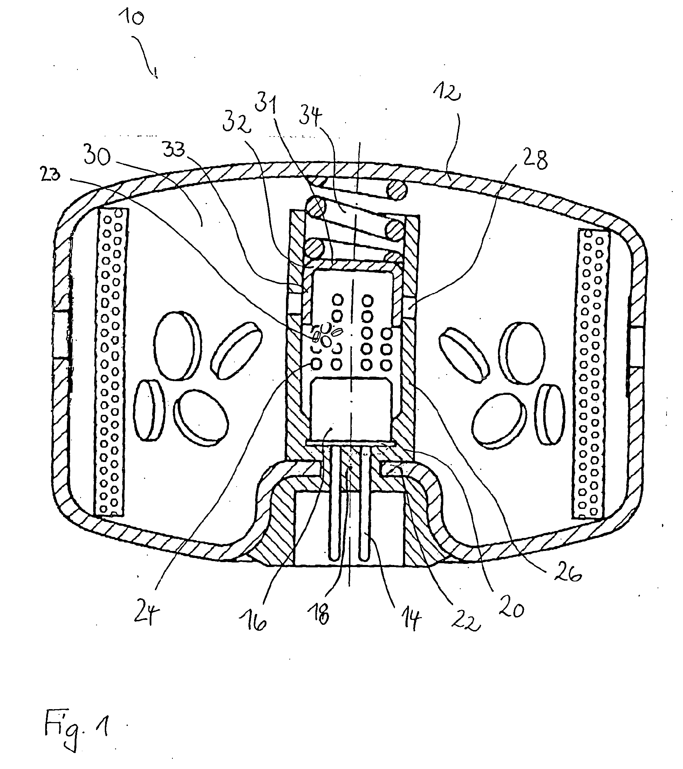

In Figur 1 ist die konstant dicke Umfangswand 26 mit Ausströmöffnungen 28 versehen. Eine längs der Umfangswand 26 verschiebliche, aus einem umgeformten Blechteil gebildete Kappe 32 verschließt die Ausströmöffnungen 28 und die Verstärkerkammer 24 im ungezündeten Zustand, indem sie von einem federelastischen Element 34, das sich an einer dem Zünder 16 gegenüberliegenden Seite des Generatorgehäuses 12 abstützt, nach innen gedrückt wird. Das federelastische Element 34 ermöglicht, daß die in der Verstärkerkammer 24 vorgesehene tablettenförmige Verstärkerladung 23 dicht gelagert ist und die einzelnen Tabletten dadurch nicht aneinander reiben und sich abnützen können.

Da die Verstärkerkammer 24 kreiszylindrisch ist, hat die Kappe 32 dementsprechend ein kreisförmiges Basisteil 31 mit vorstehenden Rändern 33, wobei der Durchmesser der Kappe 32 so gewählt ist, daß die vorstehenden Ränder 33 über den gesamten Umfang an der Umfangswand 26 der Verstärkerkammer 24 anliegen.

Bei der Aktivierung des Gasgenerators 10 werden zunächst der Zünder 16 und daraufhin die Verstärkerladung 23 gezündet. Aufgrund der Gasentwicklung wird zu einem (unter anderem durch den Verschiebewiderstand der Kappe 32 in der Verstärkerkammer 24 bestimmten) Zeitpunkt nach der Zündung die Kappe 32 längs der Verstärkerkammer 24 entgegen der Wirkung des federelastischen Elements 34 gemäß Figur 1 nach oben verschoben, um die Ausströmöffnungen 28 freizugeben. Durch die aus der Verstärkerkammer 24 überströmenden heißen Gase wird dann der in der Brennkammer 30 enthaltene Treibstoff gezündet und ein daran anschließender Gassack aufgeblasen (nicht gezeigt).

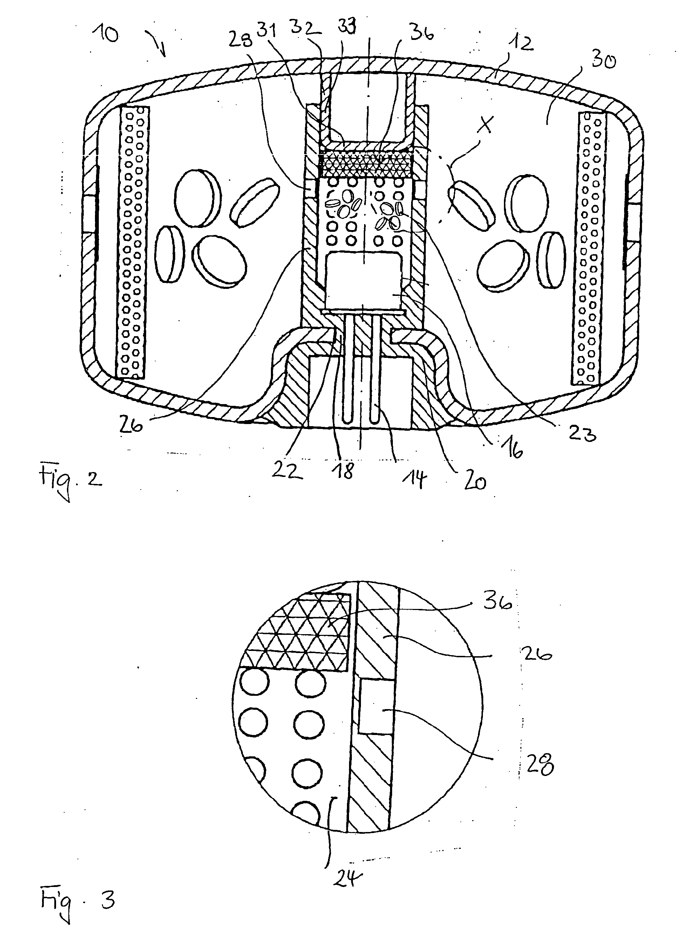

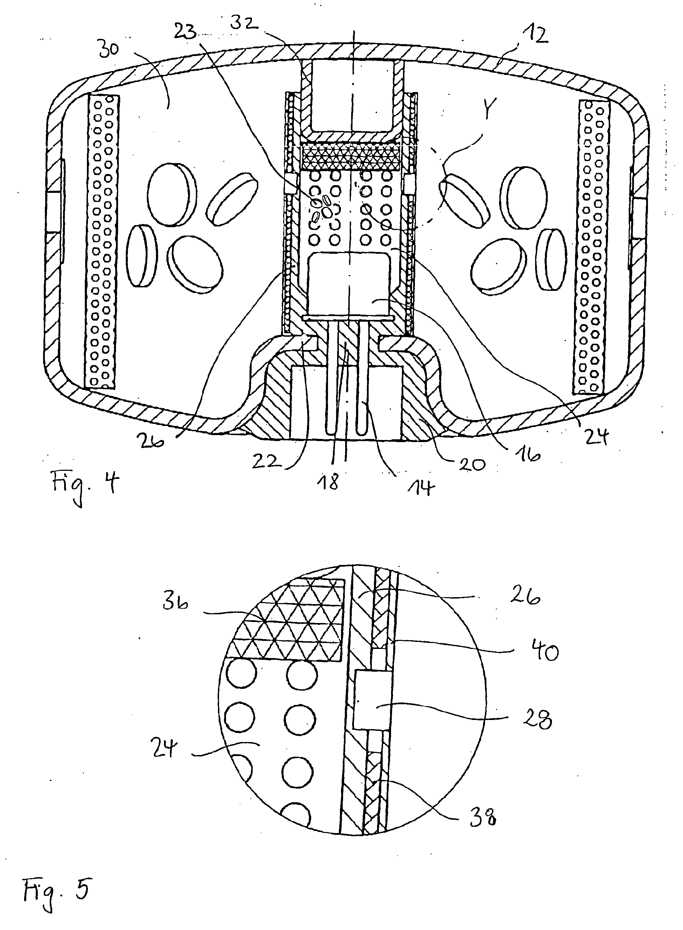

In den Figuren 2 und 3 ist der Gasgenerator 10 in einer zweiten Ausführungsform gezeigt, wobei in dieser Ausführungsform bekannte Bauteile mit denselben Bezugszeichen versehen sind und insoweit auf obige Erläuterungen verwiesen wird.

Die mit dem Kunststoffsockel 20 gespritzte Umfangswand 26 ist in den Bereichen, die nach dem Zünden der Zündervorrichtung die Ausströmöffnungen 28 bilden, dünnwandiger als in den übrigen Bereichen.

Es ist eine unverschiebliche Kappe 32 vorgesehen, die die Verstärkerkammer 24 auf der dem Zünder 16 gegenüberliegenden Seite begrenzt und aus einem umgeformten einstückigen Blechteil gebildet ist. Die Kappe 32 stützt sich mit den vorstehenden Rändern 33 am Generatorgehäuse 12 ab. Zwischen der Kappe 32 und der Verstärkerladung 23 ist ein Füllkörper 36 vorgesehen, der ähnlich dem federelastischem Element 34 die Verstärkerladung 23 vorspannt.

Bei der Funktionsweise des Gasgenerators 10 unterscheidet sich diese Ausführungsform von der ersten Ausführungsform dadurch, daß die Kappe 32 unverschieblich ist und aufgrund der Gasentwicklung nach dem Zünden des Zünders 16 in der Verstärkerkammer 24 die Umfangswand 26 im Bereich der vorbestimmten Ausströmöffnungen 28 zerstört wird, um die Ausströmöffnungen 28 zu öffnen.

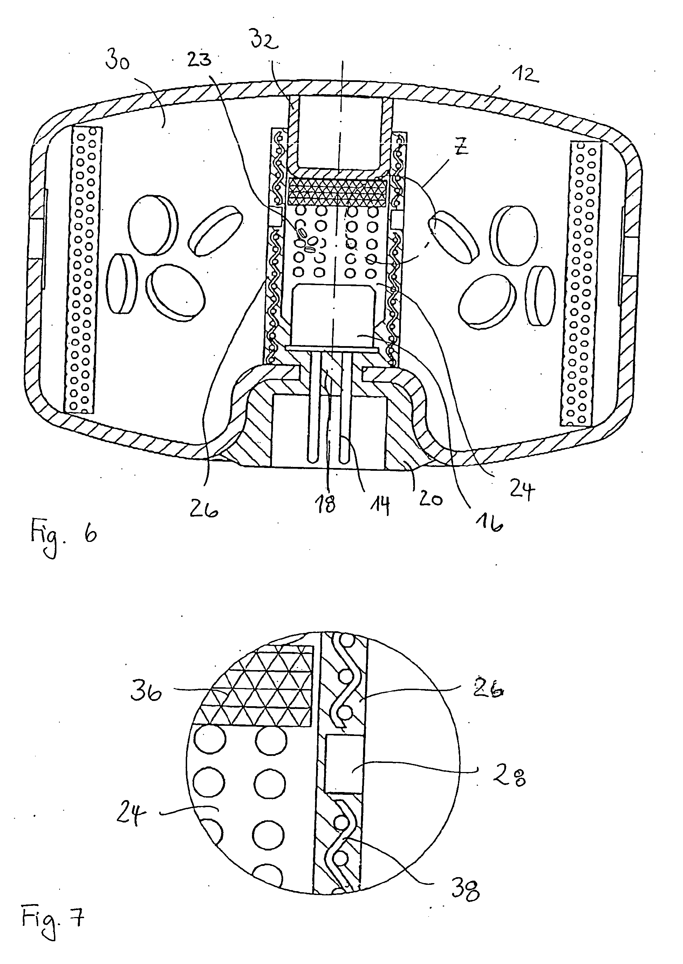

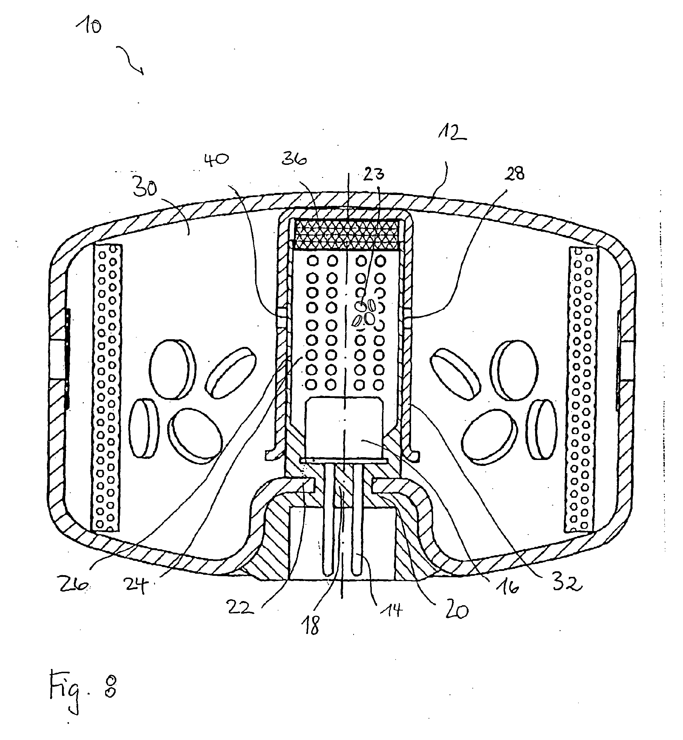

In den Figuren 4 und 5 ist der Gasgenerator 10 in einer weiteren Ausführungsform gezeigt. Diese unterscheidet sich von der zweiten Ausführungsform nur dadurch, daß an die Umfangswand 26 eine Verstärkungslage 38 aus Metall angrenzt. Die Verstärkungslage 38 umgibt die Umfangswand 26 vollständig und ist selbst von einer gespritzten Kunststoffwand 40 außenseitig umgeben. Die außenseitige gespritzte Kunststoffwand 40 kann jedoch auch entfallen (nicht gezeigt).

Sowohl die äußere Kunststoffwand 40 als auch die Verstärkungslage 38 weisen Ausströmöffnungen auf (Figur 5). Dabei sind die Ausströmöffnungen in der Verstärkungslage 38 bereits im ungezündeten Zustand geöffnet und größer als die in der Umfangswand 26 vorgesehenen, dazu fluchtenden Ausströmöffnungen 28, so daß bei der Montage der Verstärkungslage 38 ein Anpassen und Ausrichten an die Ausströmöffnung 28 in der Umfangswand 26 ausbleiben können.

Die hier gezeigte Verstärkungslage 38 ist in Längsrichtung entlang der Umfangswand 26 angeordnet, sie könnte jedoch auch spiral- oder ringförmig um die Umfangswand 26 umlaufen (nicht gezeigt).

In den Figuren 6 und 7 ist eine weitere Ausführungsform des Gasgenerators 10 gezeigt, der eine Verstärkungslage 38 aufweist, die in die Umfangswand 26 eingebettet ist. Die Verstärkungslage 38 wird vor dem Spritzen in die Spritzform eingelegt und beim Spritzen der Umfangswand 26 von dieser umspritzt.

Figur 8 zeigt eine weitere Ausführungsform des Gasgenerators 10. Die Umfangswand 26 weist hier eine konstante Dicke auf und hat im ungezündeten Zustand Bereiche mit vorbestimmten Ausströmöffnungen 28, die nach dem Zünden geöffnet werden und die nicht geschwächt sind.

Die mit Ausströmöffnungen 42 versehene Kappe 32 weist in dieser Ausführungsform einen größeren Durchmesser als die Umfangswand 26 auf und ist über die Verstärkungskammer 24 gestülpt. Beim Zünden der Vorrichtung bricht die Umfangswand 26 im Bereich der Ausströmöffnungen 42 zur Bildung der Ausströmöffnungen 28 auf.

Bei sämtlichen gezeigten Ausführungsformen besteht das Gehäuse 12 aus einer Ober- und einer Unterschale, die am Rand miteinander verbunden sind. Nur zur einfacheren Darstellung ist das Gehäuse 12 einstückig dargestellt.

Die Herstellung des erfindungsgemäßen Gasgenerators 10 wird im folgenden kurz erläutert. Zuerst werden die Unterschale und der Zünder 16 in einer Spritzform positioniert. Dann werden in einem Arbeitsschritt Sockel 20 und Umfangswand 26 gespritzt. Nun wird die Verstärkerladung 23 in die erzeugte Verstärkerkammer gefüllt, die anschließend mit der Kappe 32 verschlossen wird. Das Filter sowie der Treibstoff werden nun in die Brennkammer 30 gefüllt. Anschließend kann gegebenenfalls auch noch das federelastische Element 34, falls vorhanden, aufgesetzt werden, bevor die deckelartige Oberschale auf die Unterschale gesetzt und beide Teile miteinander verbunden werden.

## Patentansprüche

1. Gasgenerator, mit
einem Generatorgehäuse (12),
einer Zündervorrichtung, die einen vorgefertigten, nach außen abgeschlossenen Zünder (16), eine an den Zünder (16) angrenzende Verstärkerladung (23) und einen gespritzten Kunststoffsockel (20) aufweist, in den beim Spritzen ein Rand (22) einer Zündervorrichtungsaufnahmeöffnung (18) zur Befestigung der Zündervorrichtung am Generatorgehäuse (12) eingebettet ist, und einer Verstärkerkammer (24) mit einer Umfangswand (26), an der die Verstärkerladung (23) unmittelbar angrenzt,
wobei in den Kunststoffsockel (20) zum Zünder (16) führende Anschlußleitungen (14) beim Spritzen eingebettet sind
**dadurch gekennzeichnet, daß**
der Kunststoffsockel (20) einstückig in die Verstärkerkammer (24) übergeht und die Umfangswand (26) der Verstärkerkammer (24) bildet, an der die Verstärkerladung (23) unmittelbar angrenzt.

2. Gasgenerator nach Anspruch 1, **dadurch gekennzeichnet, daß** die Verstärkerladung (23) vollständig in dem von der Umfangswand (26) definierten Füllvolumen enthalten ist.

3. Gasgenerator nach Anspruch 1 oder 2, **dadurch gekennzeichnet, daß** die Umfangswand (26) Bereiche mit vorbestimmten Ausströmöffnungen (28) aufweist.

4. Gasgenerator nach Anspruch 3, **dadurch gekennzeichnet, daß** die Ausströmöffnungen (28) im ungezündeten Zustand geschlossen und nach dem Zünden der Zündervorrichtung geöffnet sind.

5. Gasgenerator nach Anspruch 3 oder 4, **dadurch gekennzeichnet, daß** die Umfangswand (26) in den Bereichen der Ausströmöffnungen (28) dünnwandiger als in den übrigen Bereichen ausgebildet ist.

6. Gasgenerator nach einem der Ansprüche 3 oder 4, **dadurch gekennzeichnet, daß** die Umfangswand (26) in allen Bereichen eine konstante Dicke aufweist.

7. Gasgenerator nach einem der vorhergehenden Ansprüche, **dadurch gekennzeichnet, daß** eine Kappe (32) vorgesehen ist, die die Verstärkerkammer (24) auf der dem Zünder (16) gegenüberliegenden Seite begrenzt.

8. Gasgenerator nach einem der vorhergehenden Ansprüche, **dadurch gekennzeichnet, daß** eine Kappe (32) an der dem Zünder (16) gegenüberliegenden Seite an die Verstärkerkammer (24) angrenzt und auf einem Generatorgehäuseabschnitt abgestützt ist, der der Zündervorrichtungsaufnahmeöffnung (18) gegenüberliegt.

9. Gasgenerator nach Anspruch 7 oder 8, **dadurch gekennzeichnet, daß** die Kappe (32) verschieblich ist und von einem federelastischen Element (34) im ungezündeten Zustand so beaufschlagt wird, daß sie die Bereiche der Ausströmöffnungen (28) bedeckt.

10. Gasgenerator nach einem der Ansprüche 7 bis 9, **dadurch gekennzeichnet, daß** die Kappe (32) über die Verstärkerkammer (24) gestülpt ist und die Umfangswand (26) seitlich abstützt.

11. Gasgenerator nach einem der vorhergehenden Ansprüche, **dadurch gekennzeichnet, daß** an die Umfangswand (26) wenigstens abschnittsweise eine Verstärkungslage (38) angrenzt oder die Verstärkungslage (38) in die Umfangswand (26) eingebettet ist.

12. Gasgenerator nach Anspruch 11, **dadurch gekennzeichnet, daß** die Verstärkungslage (38) aus Metall ist.

13. Gasgenerator nach Anspruch 11 oder 12, **dadurch gekennzeichnet, daß** die Verstärkungslage (38) von einer Kunststoffwand (40) umgeben ist, die an die Umfangswand (26) gespritzt ist.

14. Gasgenerator nach einem der Ansprüche 11 bis 13, **dadurch gekennzeichnet, daß** die Verstärkungslage (38) Ausströmöffnungen aufweist.

15. Gasgenerator nach einem der Ansprüche 11 bis 14, **dadurch gekennzeichnet, daß** die Verstärkungslage (38) spiral- oder ringförmig ausgebildet ist.

16. Gasgenerator nach einem der Ansprüche 11 bis 15, **dadurch gekennzeichnet, daß** die Verstärkungslage (38) entlang der Umfangswand (26) in Längsrichtung angeordnet ist.

## Claims

1. A gas generator comprising
a generator housing (12),
an igniter device which includes a prefabricated igniter (16) sealed off towards the exterior, a booster charge (23) adjoining the igniter (16), and an injection-molded plastic base (20) into which an edge (22) of an igniter device mounting opening (18) for fastening the igniter device to the generator housing (12) is embedded during injection-molding, and a booster chamber (24) having a peripheral wall (26) which the booster charge (23) directly adjoins,
connecting leads (14) leading to the igniter (16) being embedded into the plastic base (20) during injection-molding,
**characterized in that**
the plastic base (20) continues in one piece into the booster chamber (24) and forms the peripheral wall (26) of the booster chamber (24) which the booster charge (23) directly adjoins.

2. The gas generator according to claim 1, **characterized in that** the booster charge (23) is contained entirely in the filling volume defined by the peripheral wall (26).

3. The gas generator according to claim 1 or 2, **characterized in that** the peripheral wall (26) has regions with predetermined outflow openings (28).

4. The gas generator according to claim 3, **characterized in that** the outflow openings (28) are closed in the non-ignited state and are opened after the igniter device is ignited.

5. The gas generator according to claim 3 or 4, **characterized in that** the peripheral wall (26) has thinner walls in the regions of the outflow openings (28) than in the remaining regions.

6. The gas generator according to either of claims 3 or 4, **characterized in that** the peripheral wall (26) has a constant thickness in all regions.

7. The gas generator according to any of the preceding claims, **characterized in that** a cap (32) is provided which delimits the booster chamber (24) on the side opposite the igniter (16).

8. The gas generator according to any of the preceding claims, **characterized in that** a cap (32) adjoins the booster chamber (24) on the side opposite the igniter (16) and is supported on a section of the generator housing opposite the igniter device mounting opening (18).

9. The gas generator according to claim 7 or 8, **characterized in that** the cap (32) is displaceable and is acted upon in the non-ignited state by a spring-elastic element (34) such that it covers the regions of the outflow openings (28).

10. The gas generator according to any of claims 7 to 9, **characterized in that** the cap (32) is turned over the booster chamber (24) and supports the peripheral wall (26) laterally.

11. The gas generator according to any of the preceding claims, **characterized in that** a reinforcement layer (38) at least partially adjoins the peripheral wall (26) or the reinforcement layer (38) is embedded in the peripheral wall (26).

12. The gas generator according to claim 11, **characterized in that** the reinforcement layer (38) is made of metal.

13. The gas generator according to claim 11 or 12, **characterized in that** the reinforcement layer (38) is surrounded by a plastic wall (40) which is injection-molded onto the peripheral wall (26).

14. The gas generator according to any of claims 11 to 13, **characterized in that** the reinforcement layer (38) has outflow openings.

15. The gas generator according to any of claims 11 to 14, **characterized in that** the reinforcement layer (38) is made to have a spiral or ring shape.

16. The gas generator according to any of claims 11 to 15, **characterized in that** the reinforcement layer (38) is arranged along the peripheral wall (26) in the longitudinal direction.

## Revendications

1. Générateur de gaz comprenant
un boîtier de générateur (12),
un dispositif d'allumage qui présente un allumeur (16) fermé vis-à-vis de l'extérieur, une charge d'amplification (23) adjacente à l'allumeur (16) et un socle de matière plastique (20) moulé par injection dans lequel un bord (22) d'une ouverture de réception de dispositif d'allumage (18) pour fixer le dispositif d'allumage au boîtier de générateur (12) est noyé pendant le moulage par injection, et une chambre d'amplification (24) avec un bord périphérique (26) auquel la charge d'amplification (23) est directement adjacente,
des lignes de connexion (14), qui mènent à l'allumeur (16), étant noyées dans le socle de matière plastique (20) pendant le moulage par injection,
**caractérisé en ce que**
le socle de matière plastique (20) passe d'un seul tenant dans la chambre d'amplification (24) et forme la paroi périphérique (26) de la chambre d'amplification (24) à laquelle la charge d'amplification (23) est directement adjacente.

2. Générateur de gaz selon la revendication 1, **caractérisé en ce que** la charge d'amplification (23) est totalement comprise dans le volume de remplissage défini par la paroi périphérique (26).

3. Générateur de gaz selon la revendication 1 ou 2, **caractérisé en ce que** la paroi périphérique (26) présente des régions avec des orifices d'échappement (28) prédéterminés.

4. Générateur de gaz selon la revendication 3, **caractérisé en ce que** les orifices d'échappement (28) sont fermés à l'état non allumé et ouverts après l'allumage du dispositif d'allumage.

5. Générateur de gaz selon la revendication 3 ou 4, **caractérisé en ce que** dans les régions des orifices d'échappement (28), la paroi périphérique (26) est réalisée plus mince que dans les autres régions.

6. Générateur de gaz selon l'une des revendications 3 ou 4, **caractérisé en ce que** la paroi périphérique (26) présente une épaisseur constante dans toutes les régions.

7. Générateur de gaz selon l'une des revendications précédentes, **caractérisé en ce qu'**il est prévu un capuchon (32) qui délimite la chambre d'amplification (24) sur le côté opposé à l'allumeur (16).

8. Générateur de gaz selon l'une des revendications précédentes, **caractérisé en ce qu'**un capuchon (32) est adjacent à la chambre d'amplification (24), sur le côté opposé à l'allumeur (16) et prend appui sur un tronçon de boîtier de générateur qui est opposé à l'orifice de réception de dispositif d'allumage (18).

9. Générateur de gaz selon la revendication 7 ou 8, **caractérisé en ce que** le capuchon (32) est déplaçable et à l'état non allumé, il est sollicité de telle sorte par un élément élastique à effet de ressort qu'il couvre les régions des orifices d'échappement.

10. Générateur de gaz selon l'une des revendications 7 à 9, **caractérisé en ce que** le capuchon (32) est retourné par dessus la chambre d'amplification (24) et soutient latéralement la paroi périphérique (26).

11. Générateur de gaz selon l'une des revendications précédentes, **caractérisé en ce qu'**une couche de renforcement (38) est adjacente au moins par tronçons à la paroi périphérique (26), ou la couche de renforcement (38) est noyée dans la paroi périphérique (26).

12. Générateur de gaz selon la revendication 11, **caractérisé en ce que** la couche de renforcement (38) est en métal.

13. Générateur de gaz selon la revendication 11 ou 12, **caractérisé en ce que** la couche de renforcement (38) est entourée par une paroi de matière plastique (40) qui est moulée par injection sur la paroi périphérique (26).

14. Générateur de gaz selon l'une des revendications 11 à 13, **caractérisé en ce que** la couche de renforcement (38) présente des orifices d'écoulement.

15. Générateur de gaz selon l'une des revendications 11 à 14, **caractérisé en ce que** la couche de renforcement (38) est réalisée en forme de spirale ou en forme d'anneau.

16. Générateur de gaz selon l'une des revendications 11 à 14, **caractérisé en ce que** la couche de renforcement (38) est agencée le long de la paroi périphérique (26) en direction longitudinale.
